Europäisches Patentamt

European Patent Office

Office européen des brevets

(19)

(11) Numéro de publication:

0 249 545
A1

(12) **DEMANDE DE BREVET EUROPEEN**

(21) Numéro de dépôt: 87401279.2

(22) Date de dépôt: 05.06.87

(51) Int. Cl.4: **D 21 C 11/04**
**B 01 D 19/02**

(30) Priorité: 11.06.86 FR 8608449

(43) Date de publication de la demande:
16.12.87 Bulletin 87/51

(84) Etats contractants désignés: **AT DE ES IT SE**

(71) Demandeur: **COMPAGNIE FRANCAISE D'ETUDES ET DE
CONSTRUCTION "TECHNIP"**
.170 Place Henri Regnault
**F-92090 Paris la Défense (FR)**

(72) Inventeur: **Frayer, Jean-Yves Paul François
22 rue de la Jonchée
F-78290 Ecquevilly (FR)**

(74) Mandataire: **Durand, Yves Armand Louis et al
Cabinet Z. Weinstein 20, Avenue de Friedland
F-75008 Paris (FR)**

(54) Procédé et installation de séparation de la silice contenue dans les liqueurs noires résiduaires de la fabrication de pâte à papier.

(57) La présente invention concerne un procédé et une installation de séparation de la silice contenue dans les liqueurs noires résiduaires de la fabrication de pâte à papier.

Cette installation comprend essentiellement un système de mélange (16, 23) de la liqueur noire pulvérisée avec du gaz de fumée, et en aval de ce sytème, un réacteur (32) maintenant en contact la liqueur noire pulvérisée et le gaz de fumée, un cyclone (38) produisant une fraction liquide et une fraction gaz-mousse, ces deux fractions alimentant une enceinte (40) dans laquelle on obtient un liquide (L) ensemencé en silice, et un appareil de centrifugation de ce liquide, raccordé à l'enceinte (40).

L'installation selon cette invention permet, grâce à la séparation efectuée au niveau du cyclone (38), d'obtenir une précipitation quasi immédiate de la silice dans le liquide contenu dans l'enceinte (40).

EP 0 249 545 A1

## Description

"Procédé et installation de séparation de la silice contenue dans les liqueurs noires résiduaires de la fabrication de pâte à papier".

La présente invention a essentiellement pour objet un procédé de séparation de la silice contenue dans les liqueurs noires résiduaires de la fabrication de pâte à papier.

Elle vise également une installation pour la mise en oeuvre de ce procédé.

On sait que l'élimination de la silice contenue dans une liqueur noire peut être obtenue grâce au principe chimique bien connu qui consiste à abaisser le pH de la liqueur noire de façon à provoquer la précipitation de la silice sous forme d'acide silicique.

C'est ainsi que l'on a déjà proposé des installations comportant des tours dans lesquelles la liqueur noire à l'état pulvérisé est mise en contact avec du dioxyde de carbone contenu dans un gaz de fumée en vue d'abaisser le pH de la liqueur noire carbonatée obtenue, et d'y provoquer la précipitation de la silice qui est par la suite séparée.

Mais ces installations connues présentent notamment les inconvénients suivants. Le volume de mousse produit et résultant de la mise en contact de la liqueur noire avec le dioxyde de carbone n'est pas mis à profit pour procurer une précipitation importante d'acide silicique, si bien que cette mise en contact ne permet pas finalement de réaliser une séparation efficace de la silice contenue dans la liqueur noire. En outre, la mise en contact de la liqueur noire avec le dioxyde de carbone est généralement réalisée dans une ou même plusieurs tours de façon à parfaire la précipitation de la silice, cette tour ou ces tours présentant un encombrement important et compliquant evidemment l'installation, ce qui, comme on le comprend, augmente considérablement les coûts.

Aussi, la présente invention a pour but de pallier notamment les inconvénients ci-dessus en proposant un procédé et une installation de séparation de la silice des liqueurs noires, qui permettent de réaliser une précipitation et une séparation de la silice dans des conditions optimales, et qui demeurent simples, fiables et peu coûteux sur le plan de l'exploitation.

A cet effet, l'invention a pour objet un procédé de séparation de la silice contenue dans les liqueurs noires résiduaires de la fabrication de pâte à papier, et du type consistant à mettre en contact la liqueur noire à l'état pulvérisé avec du dioxyde de carbone contenu par exemple dans un gaz de fumée en vue d'abaisser le pH de la liqueur noire carbonatée obtenue, et d'y provoquer la précipitation de la silice que l'on sépare ensuite de la liqueur noire, caractérisé en ce que la mousse résultant de la mise en contact précitée subit, après un certain temps de passage dans un réacteur, au moins une séparation par effet cyclone ou autre permettant d'obtenir une liqueur ensemencée en silice qui est par la suite soumise à au moins une centrifugation procurant une boue de silice et une liqueur clarifiée.

Comme on l'expliquera plus loin, c'est précisément le passage de la mousse dans le réacteur puis sa séparation par effet cyclone qui placent la mousse dans des conditions telles qu'on pourra obtenir une liqueur ensemencée en silice de manière efficace, sans qu'il soit besoin d'utiliser une ou plusieurs tours encombrantes de mise en contact de la liqueur noire directement avec le gaz de fumée, comme c'était le cas auparavant ou un ensemencement par un tiers corps, comme il a déjà été suggéré.

Suivant une autre caractéristique du procédé de l'invention, on procède à une détente de la mousse avant séparation au moins partielle par effet cyclone, ou bien à une détente du mélange gaz-mousse obtenu après cette séparation, avec éventuellement une injection complémentaire de gaz de fumée dans le mélange gaz-mousse.

Ce procédé est encore caractérisé par le fait que la boue de silice après la centrifugation est mélangée avec un flux de liqueur clarifiée, puis est soumise à au moins une décantation, tandis que la liqueur résultant de cette décantation est éventuellement recyclée vers la centrifugation.

Suivant un mode de réalisation du procédé de l'invention, le flux de liqueur clarifiée précitée est constitué par une première fraction de liqueur clarifiée résultant de la centrifugation d'un mélange de boue précédemment décantée, d'eau, et d'une deuxième fraction de liqueur clarifiée provenant de ladite centrifugation.

On ajoutera ici que le mélange précité de boue, d'eau et de la deuxième fraction de liqueur clarifiée est floculé par abaissement du pH avant la centrifugation citée en dernier lieu, ce qui permet de séparer beaucoup plus facilement la boue de silice de la liqueur clarifiée lors de ladite centrifugation.

Suivant un autre mode de réalisation du procédé selon cette invention, la liqueur clarifiée précitée est constituée par au moins une fraction de liqueur tirée d'une première décantation à laquelle est soumis un mélange de boue précédemment décantée et de liqueur clarifiée provenant d'une deuxième décantation à laquelle est soumis un mélange d'eau et de boue résultant de la première décantation, une floculation de la silice étant obtenue en amont des première et deuxième décantations précitées ce qui, comme précédemment, permet d'obtenir une excellente séparation de la boue de silice de la liqueur clarifiée après la deuxième décantation.

Suivant encore une autre caractéristique du procédé de l'invention, la fraction gaz-mousse séparée par l'effet cyclone précité est à nouveau séparée par effet cyclone, mécanique ou autre, et le liquide en résultant recyclé est recueilli dans le mélange liquide-gaz provenant de la séparation par effet cyclone mentionnée en premier lieu.

L'invention vise encore une installation pour la mise en oeuvre du procédé répondant à l'une ou l'autre des caractéristiques ci-dessus, et du type comprenant un système de mélange de la liqueur noire pulvérisée avec du gaz de fumée, caractérisée en ce qu'elle comprend successivement et en aval du système précité, des moyens de maintien en contact de la liqueur noire pulvérisée avec le gaz de fumée, au moins un cyclone ou autre élément produisant une fraction liquide et une fraction gaz-mousse, ces deux fractions alimentant une enceinte ou analogue, et au moins un appareil de centrifugation de la fraction liquide, raccordé à ladite enceinte.

Cette installation est encore caractérisée par une vanne de détente placée sur la conduite reliant les moyens précités de maintien en contact, au cyclone, ou placée sur la conduite reliant le sommet du cyclone à l'enceinte, un conduit d'alimentation en gaz de fumée supplémentaire pouvant être raccordé à la conduite précitée.

On précisera encore ici qu'une enceinte de rétention est éventuellement interposée entre l'enceinte précitée et l'appareil de centrifugation qui est relié à un bac tampon lui-même raccordé à un décanteur relié à l'enceinte de rétention.

Suivant un mode de réalisation de cette installation, le décanteur précité est raccordé à un appareil centrifugeur par une conduite communiquant avec une alimentation en eau, ledit centrifugeur comportant une conduite de sortie de liqueur clarifiée qui se divise en une portion de conduite reliée à la conduite précédemment mentionnée et en une portion de conduite reliée au bac tampon, tandis que ledit centrifugeur peut comporter une conduite de recyclage de liqueur non clarifiée vers l'enceinte recevant les fractions gaz-mousse et liquide.

Suivant un autre mode de réalisation de l'installation, le décanteur précité est relié par une conduite à un premier décanteur lui-même relié par un conduit alimenté en eau à un deuxième décanteur qui est raccordé à la conduite précitée, tandis que le premier décanteur est raccordé au bac tampon et à un conduit d'évacuation du liquide clarifié.

On précisera encore ici que l'enceinte citée en dernier lieu comporte en partie haute un cyclone ou un moyen mécanique approprié de séparation de la mousse sortant de cette enceinte, et un conduit de recyclage de liquide reliant le cyclone à ladite enceinte.

L'installation selon cette invention comprend encore un système de réchauffage de la liqueur noire en amont du système de mélange précité.

L'installation selon cette invention est encore caractérisée par des moyens de régulation et de contrôle du débit de liqueur noire et de gaz de fumée parvenant au système de mélange précité, de tels moyens étant également prévus en amont et en aval de l'enceinte de séparation.

Mais d'autres caractéristiques et avantages de l'invention apparaîtront mieux dans la description détaillée qui suit et se réfère aux dessins annexés, donnés uniquement à titre d'exemple, et dans lesquels :

- la figure 1 est une vue schématique partielle de l'installation et montrant essentiellement le système de réchauffage de la liqueur noire, le système de mélange de cette liqueur noire pulvérisée avec du gaz de fumée, un réacteur, un cyclone et une enceinte de séparation-précipitation ;

- la figure 2 est une vue schématique illustrant un autre mode de réalisation de détente au niveau de l'ensemble réacteur-cyclone-enceinte de précipitation ;

- la figure 3 illustre schématiquement la partie terminale de l'installation visible sur la figure 1, c'est-à-dire située en aval de l'enceinte de précipitation ; et

- la figure 4 est une vue schématique similaire à la figure 3, mais montrant une variante de réalisation de la partie terminale de l'installation.

On décrira dans ce qui suit, la structure et le fonctionnement de l'installation montrée sur ces quatre figures.

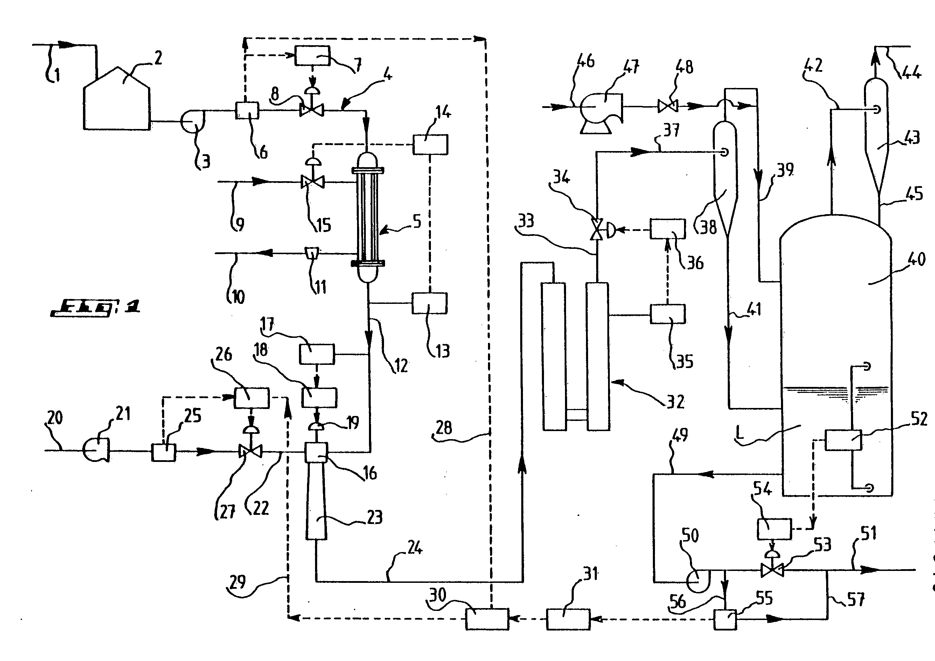

Suivant un exemple de réalisation, et comme on le voit sur la figure 1, on envoie par une conduite 1, dans un bac de stockage 2, une liqueur noire qui est par exemple récupérée au premier étage de lavage d'un atelier de pâte à papier traitant par exemple de la bagasse ou de la paille de riz par digestion chimique alcaline. La liqueur stockée est ensuite acheminée par une pompe 3 et un conduit 4 vers un système de réchauffage 5 de la liqueur noire, qui, suivant un exemple de réalisation, est un échangeur. Le débit de liqueur noire parvenant à l'échangeur 5 est contrôlé par un élément de mesure 6, un régulateur 7 et une vanne 8 sur le conduit 4.

L'échangeur 5 comprend une conduite 9 d'entrée de vapeur et une conduite 10 d'évacuation des condensats de vapeur et munie d'un purgeur 11. La liqueur réchauffée sort de l'échangeur 5 par une conduite 12 et sa température est mesurée par un élément 13 relié à un régulateur 14 qui contrôle une vanne 15 placée sur la conduite de vapeur 9.

La liqueur noire sortant de l'échangeur 5 par la conduite 12 à une température comprise entre environ 60 et 90°C est injectée dans une buse ou analogue 16 assurant la pulvérisation de la liqueur. On a montré en 17 un organe de mesure de pression relié à la conduite 12 et qui actionne un régulateur 18 contrôlant une vanne 19 qui règle la chute de pression de la liqueur passant dans la buse 16. Ceci permet, comme on le comprend, de régler le degré de pulvérisation de la liqueur.

Une source quelconque de dioxyde de carbone ($CO_2$), constituée par exemple par du gaz de fumée contenant de 5 à 30% en volume de $CO_2$ est envoyée par la conduite 20, le ventilateur 21 et la conduite 22 vers la buse 16 où le gaz de fumée est intimement brassé avec la liqueur noire déjà pulvérisée pour former dans un mélangeur 23 une émulsion stable de mousse dense et homogène qui sort du mélangeur par la conduite 24.

La conduite 22 comporte un organe 25 de mesure du débit de gaz de fumée comprimé entre environ 1,5 et 2 bars effectifs, cet organe étant relié à un régulateur 26 agissant sur une vanne 27 placée elle aussi sur la conduite 22 et contrôlant le débit de gaz.

Le débit de liqueur mesuré par l'élément 6 décrit précédemment contrôle indirectement, comme matérialisé par les lignes 28 et 29, le point de consigne du débit de gaz dans l'organe 23 par l'intermédiaire d'un comparateur 30 qui reçoit également les informations de mesure du pH de la solution carbonatée, fournies par un pH mètre 31.

Le mélange à co-courant dans le mélangeur 23 de la liqueur pulvérisée et du gaz de fumée permet d'abaisser le pH de la liqueur noire, initialement d'environ 10,2 à 12, à un pH compris entre environ 9,2 et 10. On ajoutera que le gaz et la liqueur sont mélangés suivant un rapport de volume gaz/liqueur compris entre environ 20 et 80 et de préférence entre 40 et 50, ce rapport étant évidemment fonction de l'abaissement de pH désiré et de la teneur en $CO_2$ du gaz de fumée. On précisera encore ici que le gaz et la liqueur sont mélangés sous une pression qui peut être comprise entre 0,4 et 2,5 bars effectifs et de préférence entre 0,6 et 1,2 bars effectifs.

La mousse sortant du mélangeur 23 à un pH compris entre environ 9,2 et 10 est transférée par la conduite 24 dans un réacteur 32 où elle séjourne pendant un temps compris entre environ 5 et 50 secondes, et de préférence entre 20 et 40 secondes.

Le réacteur 32 est par exemple constitué par une pluralité d'éléments verticaux montés en série et dans lesquels la mousse, qui se trouve à une température comprise entre environ 60 et 90°C, effectue un déplacement alternativement ascendant et descendant suivant une vitesse de passage qui peut être comprise entre 0,6 et 3 m/sec.

On précisera ici que les dimensions du réacteur 32 et la durée de passage de la mousse dans ce réacteur sont très nettement réduites par rapport à celles de la tour de contactage utilisée dans les installations connues.

La mousse sort du réacteur 32 par un conduit 33 et est détendue par une vanne 34 à une pression qui peut être comprise entre 0 et 0,2 bar effectif. On a montré en 35 un élément de mesure de pression raccordé au réacteur 32 et transmettant cette mesure à un régulateur 36 qui commande la vanne 34.

Comme on le voit sur la figure 1, la mousse détendue en 34 parvient par un conduit 37 à un cyclone 38 qui sépare la mousse en une fraction légère gaz-mousse (de rapport gaz/liquide très élevé) et en une fraction très dense et pratiquement totalement liquide (de rapport gaz/liquide très faible).

Il est très important de noter ici que c'est précisément la séparation dans le cyclone 38 en les deux fractions légère et dense précitées qui va permettre la précipitation quasi immédiate de la silice, comme on va l'expliquer maintenant. Dans la fraction légère, le rapport gaz/liquide est très élevé du fait qu'une grande partie du liquide a été séparée dans le cyclone 38. Ce rapport est de l'ordre de 100 à 1000 et entraîne une précipitation quaisi immédiate de particules de silice extrêmement ténues au sein du liquide constituant ladite fraction légère.

La fraction légère en tête du cyclone 38 est acheminée par une conduite 39 à la partie supérieure d'une enceinte de précipitation 40 tandis que la fraction dense sortant du cyclone 38 est transférée à la partie inférieure de l'enceinte 40 par l'intermédiaire d'une autre conduite 41.

Dans l'enceinte 40, on a donc en fond une fraction lourde qui est pratiquement de la liqueur noire légèrement aérée et en partie haute, on a une mousse légère contenant des particules de silice extrêmement ténues et qui se casse, ce qui produit finalement dans l'enceinte 40 un gaz et un liquide L ensemencé très riche en germes de silice. On a constaté que, pour un temps de séjour d'une dizaine ou de quelques dizaines de minutes de la liqueur carbonatée L dans le réacteur 40, on obtenait une précipitation totale de la silice qui se présente sous la forme de globules microscopiques susceptibles d'engendrer des agglomérats au sein de la liqueur, lesquels peuvent être séparés par des moyens mécaniques.

En tête de l'enceinte 40, la fraction légère de mousse peut s'échapper par une tuyauterie 42 aboutissant à un moyen tel que par exemple un autre cyclone 43 destiné à éliminer complètement les entraînements de mousse éventuels. Le gaz s'échappe alors du cyclone 43 par la conduite 44, tandis que le liquide retourne à l'enceinte 40 par le conduit 45.

On ajoutera ici que l'on peut avantageusement faire un apport supplémentaire de gaz de fumée à la conduite 39 en tête du premier cyclone 38, par une ligne 46 comportant un ventilateur 47 et une vanne 48.

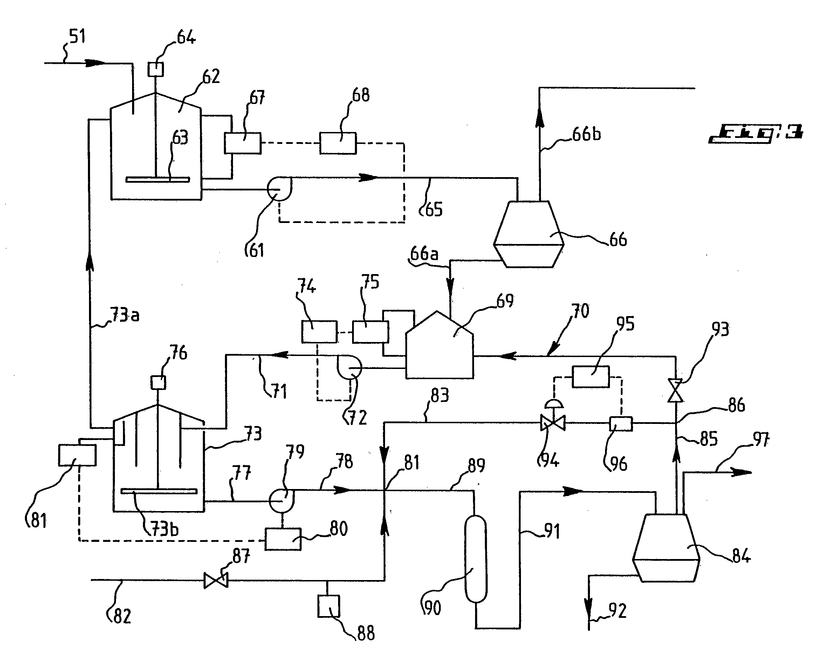

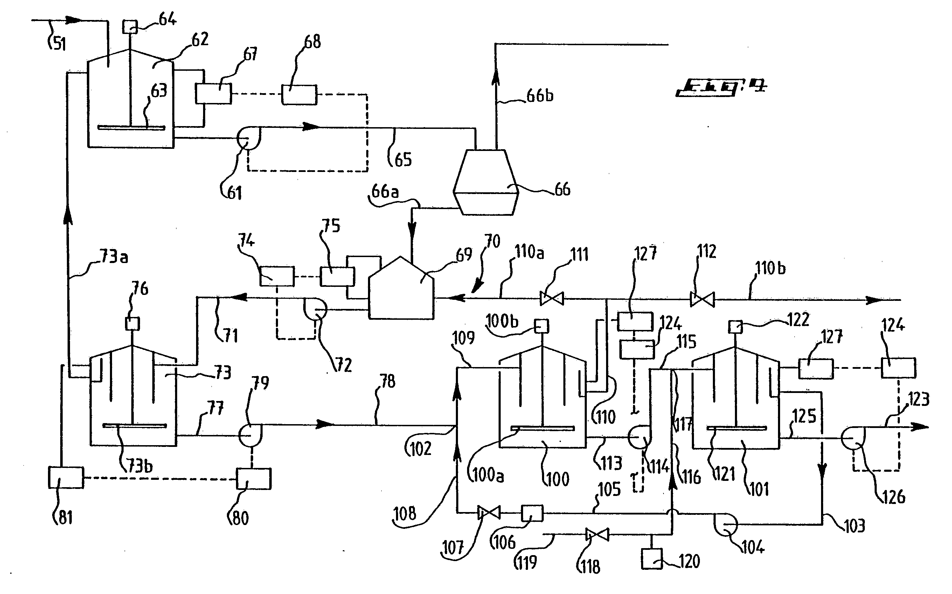

En fond de l'enceinte 40, la liqueur carbonatée L, qui est chargée de germes initiateurs de cristallisation de la silice, est transférée par une conduite 49, une pompe 50, et une conduite 51 vers la partie terminale de l'installation qui est représentée sur la figure 3 ou sur la figure 4 montrant un autre mode de réalisation de ladite partie terminale.

Revenant à la figure 1, on voit que le niveau de liqueur dans l'enceinte 40 est mesuré par un organe approprié 52 et que le débit de liqueur évacuée est contrôlé par une vanne 53 régulée par un régulateur 54.

Le pH de la liqueur carbonatée est mesuré par une électrode 55 faisant partie d'un circuit parallèle 56, 57, et cette électrode 55 donne une mesure du pH sur le pH mètre 31 mentionné précédemment et qui envoie la mesure de pH au comparateur 30. Ce dernier compare la mesure de pH à la valeur de consigne et, pour tout écart à la consigne, il recalcule un point de consigne pour le débit de gaz arrivant par la conduite 20 en fonction du débit de liquide, étant bien entendu que ces diverses opérations s'effectuent automatiquement.

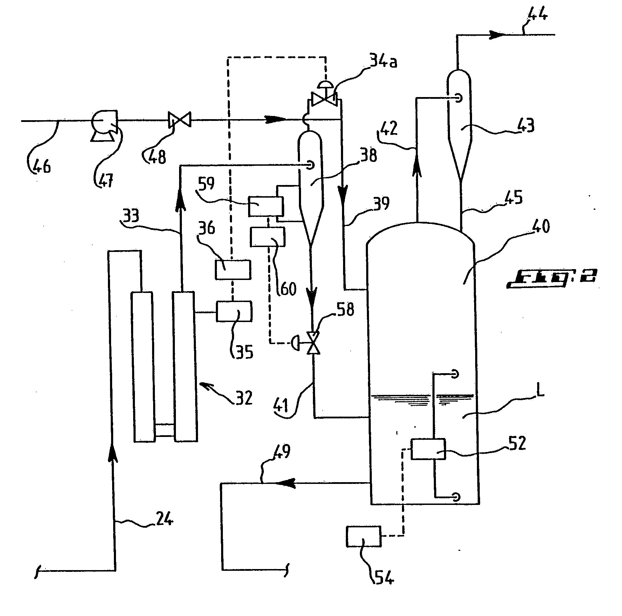

Avant de décrire la partie temrinale de l'installation montrée sur les figures 3 et 4, on se reportera tout d'abord à la figure 2, où les éléments communs à la figure 1 portent les mêmes repères.

Mais ici, le système de contrôle de la pression du réacteur 32 est différent de celui illustré sur la figure 1 dans lequel la vanne 34 était placée sur la conduite 33 en amont du cyclone 38.

Comme on le voit clairement sur la figure 2, il n'y a plus de vanne sur la conduite 33, de sorte que la mousse sortant du réacteur 32 est directement envoyée dans le cyclone 38. Ce n'est qu'en partie haute de ce cylone, c'est-à-dire sur la conduite 39, que l'on place une vanne 34a qui détend le gaz effluent sortant en tête de ce cyclone. Quant à la fraction de mousse dense ou de liquide recueillie au fond du cyclone 38, elle est évacuée par la conduite 41 qui comporte ici une vanne 58 contrôlant le niveau de liquide en fond de cyclone étant donné que cette vanne est reliée par l'intermédiaire d'un régulateur 60 à un organe 59 de mesure de niveau raccordé au cyclone 38.

La vanne 34a, comme la vanne 34 visible sur la figure 1, est pilotée par un régulateur 36 commandé par un organe de mesure 35 relié au réacteur 32.

Enfin, on notera que l'apport supplémentaire de gaz de fumée par la ligne 46, à une pression comprise entre environ 0,1 et 0,15 bar, est effectué ici en aval de la vanne de détente 34a ce qui permet de réaliser une économie sur l'énergie de compression du ventilateur 47.

En se reportant maintenant à la figure 3, on voit que la liqueur carbonatée et ensemencée L provenant de l'enceinte 40 est envoyée par la conduite 51 dans un bac de rétention 62 où elle est faiblement agitée au moyen d'un agitateur 63 entraîné en rotation par un moteur 64. Puis, après mûrissement des globules de silice dans le bac 62, la liqueur est envoyée par une conduite 65 munie d'une pompe 61 vers un appareil de centrifugation 66. On a montré en 67 un appareil de mesure de niveau du liquide dans le bac 62, lequel appareil est relié à un régulateur 68 qui contrôle la vitesse de rotation de la pompe 61. On notera ici que le bac 62 n'est pas obligatoire, de sorte que le liquide sortant de l'enceinte 40 pourrait parfaitement, sans sortir du cadre de l'invention, être envoyé directement dans l'appareil de centrifugation 66.

Cet appareil 66 permet la séparation d'une boue légère de silice contenant environ 5 à 10% de matière séche et sortant par la conduite 66a, ce qui permet d'obtenir une liqueur clarifiée ne contenant plus de silice à l'état précipité et évacuée par une conduite 66b vers par exemple le bac de stockage (non représenté) d'un atelier d'évaporation.

La boue légère de silice est expédiée par la conduite 66a dans un bac tampon 69. Dans ce bac, la boue est prémélangée à un flux 70 de liqueur clarifiée, puis envoyée par une conduite 71 munie d'une pompe 72 à un décanteur 73. A la pompe 72 est associé un système de contrôle de vitesse 74 pour ajuster le niveau lu dans le bac tampon 69 par un élément de mesure 75 raccordé à ce bac.

Dans le décanteur 73, la boue se sépare d'une liqueur surnageante encore chargée qui est recyclée au bac de rétention 62 par la conduite 73a. On notera que le décanteur 73 est muni d'un agitateur 73b entraîné par un moteur 76.

Le sédiment en fond du décanteur 73, contient environ 5 à 10% de matière solide et est sorti de ce décanteur par une conduite 77.

Tous les éléments ci-dessus décrits et représentés à la figure 3 se retrouvent sur la figure 4 où on a utilisé des repères communs pour désigner les éléments identiques, à savoir essentiellement le bac de rétention 62, l'appareil de centrifugation 66, le bac tampon 69 et le décanteur 73.

Suivant le mode de réalisation représenté sur la figure 3, la boue sortant du décanteur 73 par la conduite 77 est transférée au conduit 78 par une pompe volumétrique 79 dont la vitesse de rotation est régulée par un régulateur 80 couplé à un appareil 81 de mesure du niveau de la liqueur surnageant dans le décanteur 73. La conduite 78 communique au point 81 avec une alimentation en eau 82 et avec une conduite 83 de liqueur clarifiée provenant d'un appareil centrifugeur 84. Cet appareil centrifugeur 84 comporte en réalité une conduite 85 de sortie de liqueur clarifiée qui se divise au point 86 en la portion de conduite précitée 83 et en la portion de conduite 70 précédemment mentionnée assurant le recyclage de la liqueur clarifiée au bac tampon 69.

L'alimentation en eau brute 82 comprend une vanne 87 et un appareil de mesure du débit 88.

Ainsi, la boue provenant de la conduite 78 est diluée à raison d'environ 15 à 35% en volume avec d'une part de l'eau brute représentant environ 5 à 25% en volume, et d'autre part avec la liqueur clarifiée 83 à raison de 40 à 80% en volume, de telle sorte que le pH du mélange soit abaissé à environ 8,6-8,8.

Ainsi, au point de mélange 81, on a constaté qu'il se produit une floculation qui permet de séparer beaucoup plus facilement la boue de silice de la liqueur clarifiée.

Plus précisément, le floculat dense et à sédimentaton très rapide est acheminé par la conduite 89 dans un ballon de rétention 90, puis par la conduite 91 à l'appareil centrifugeur 84 qui assure par la ligne 92 l'évacuation d'une boue de silice épaisse qui est rejetée ou réutilisée à des fins industrielles.

On notera la présence d'une vanne 93 sur la portion de conduite 70 recyclant la liqueur clarifiée au bac-tampon 69, tandis que la portion de conduite 83 recyclant une partie de la liqueur clarifiée comme expliqué précédemment, comporte elle aussi une vanne 94 commandée par une chaîne de régulation 95, 96.

Enfin, l'appareil centrifugeur 84 peut comporter une conduite 97 de recyclage de liqueur non clarifiée vers l'enceinte 40 (figure 1), ce qui constituera une source d'ensemencement possible et complémentaire du liquide contenu dans ladite enceinte.

Suivant la réalisation visible sur la figure 4, la boue provenant du décanteur 73 pompée dans la conduite 78 par la pompe 79 est soumise à une décantation étagée produite par un premier décanteur 100 et un deuxième décanteur 101.

Plus précisément, la boue pompée en 78 est mélangée en 102 à la liqueur clarifiée provenant du deuxième décanteur 101 et recyclée suivant la ligne formée successivement par la conduite 103, la pompe 104, la conduite 105, le débitmètre 106, la vanne 107 et la conduite 108. Le flux de boue 78 et de liqueur clarifiée 108 est envoyé par la conduite 109 au premier décanteur 100 qui est muni d'un agitateur 100a entraîné par un moteur 100b.

Il est important de noter ici qu'au point 102, c'est-à-dire en amont du décanteur 100, on obtient une floculation de la silice qui permet avantageusement une séparation plus facile de la boue et de la liqueur clarifiée.

La liqueur surnageant dans le premier décanteur 100 est envoyé en totalité par la conduite 110 au bac-tampon 69, ou encore, comme cela est représenté sur la figure 4, la conduite 110 se divise en une conduite 110a avec vanne 111 reliée au bac tampon 69, et en une conduite 110b avec vanne 112 qui permet la réutilisation d'une portion de la liqueur clarifiée.

La boue partiellement clarifiée dans le décanteur 100 est reprise en fond de décanteur par le conduit 113 et la pompe 114 qui refoule cette boue par le conduit 115 vers le deuxième décanteur 101 après mélange avec de l'eau claire passant dans la conduite 116. Cette eau est délivrée par la ligne 119 sous débit constant mesuré par un appareil 120 et ajusté par une vanne 118. La conduite d'eau 116 est raccordée en 117 à la conduite 115. La boue diluée dans la conduite 115 est donc à nouveau décantée dans le deuxième décanteur 101 sous faible agitation procurée par un agitateur 121 entraîné par un moteur 122. On notera ici qu'au niveau de la conduite 115 où la boue se mélange avec l'eau, il se produit, de façon surprenante une floculation qui facilitera considérablement la séparation par décantation de la boue de silice dans le deuxième décanteur 101.

Le liquide clarifié surnageant dans le décanteur 101 est, comme expliqué précédemment, repris par la conduite 103 et recyclé avec le flux de boue 78 provenant du décanteur 73, la vanne 107 étant utilisée pour ajuster le flux de liqueur clarifiée recyclée. La boue rejetée par le décanteur 101 est reprise par une tuyauterie 125 munie d'une pompe 126 qui rejette par la ligne 123 la boue de silice, laquelle peut être traitée, par exemple séchée, pour être utilisée ultérieurement.

On ajoutera ici que les pompes 114 et 126 sont à vitesse variable et un appareil 127 de mesure de niveau, ainsi qu'un appareil 124 de régulation sont associés à chacune de ces pompes pour obtenir un niveau de liquide sensiblement constant dans les deux bacs de décantation 100 et 101.

On insistera ici sur le fait que le mode de réalisation qui vient d'être décrit en rapport avec la figure 4 procure avantageusement une floculation en amont du premier décanteur 100 et en amont du deuxième décanteur 101 ce qui permet, comme expliqué précédemment, de séparer très facilement la boue de silice.

On a donc réalisé suivant l'invention une installation qui, grâce à la séparation réalisée au niveau du cyclone 38 et grâce à la floculation réalisée en amont d'une centrifugation ou d'une décantation, permet d'une manière efficace et peu coûteuse de séparer la silice contenue dans les liqueurs noires résiduaires de la fabrication de pâte à papier.

Bien entendu, l'invention n'est nullement limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant son esprit.

## Revendications

1. Procédé de séparation de la silice contenue dans les liqueurs noires résiduaires de la fabrication de pâte à papier, et du type consistant à mettre en contact la liqueur noire à l'état pulvérisé avec du dioxyde de carbone contenu par exemple dans un gaz de fumée en vue d'abaisser le pH de la liqueur noire carbonatée obtenue et d'y provoquer la précipitation de la silice que l'on sépare ensuite de la liqueur noire, caractérisé en ce que la mousse résultant de la mise en contact précitée subit, après un certain temps de passage dans un réacteur (32), au moins une séparation par effet cyclone ou autre (38) permettant d'obtenir une liqueur (L) ensemencée en silice qui est par la suite soumise à au moins une centrifugation (66) procurant une obue épaisse de silice et une liqueur clarifiée.

2. Procédé selon la revendication 1, caractérisé en ce qu'on procède à une détente (34) de la mousse avant séparation au moins partielle par effet cyclone, ou bien à une détente (34a) du mélange gaz-mousse obtenu après cette séparation, avec éventuellement une injection complémentaire de gaz de fumée dans le mélange gaz-mousse précité (39).

3. Procédé selon la revendication 1 ou 2, caractérisé en ce que la boue de silice après centrifugation (66) est mélangée (69) avec un flux de liqueur clarifiée (70, 110a), puis est soumise à au moins une décantation (73), tandis que la liqueur (73a) résultant de cette décantation est éventuellement recyclée vers la centrifugation (66) (figures 3 et 4).

4. Procédé selon la revendication 3, caractérisé en ce que le flux de liqueur clarifiée précitée (70) est constitué par une première fraction de liqueur clarifiée résultant de la centrifugation (84) d'un mélange de boue précédemment décanté (77), d'eau (82) et d'une deuxième fraction (83) de liqueur clarifiée provenant de ladite centrifugation (figure 3).

5. Procédé selon la revendication 4, caractérisé en ce que le mélange de boue, d'eau et de la deuxième fraction de liqueur clarifiée est floculé (89, 90) par abaissement du pH avant la centrifugation précitée (84).

6. Procédé selon la revendication 3, caractérisé en ce que la liqueur clarifiée précitée (110a) est constituée par au moins une fraction de liqueur (110) tirée d'une première décantation (100) à laquelle est soumis un mélange de boue précédemment décanté (77) et de liquide clarifié (108) provenant d'une deuxième décantation (101) à laquelle est soumis un mélange d'eau (116) et de boue (115) résultant de la première décantation (100), une floculation de la silice étant obtenue en amont des première et deuxième décantations (100, 101). (figure 4).

7. Procédé selon l'une des revendications 1 à 3, caractérisé en ce que la fraction gaz-mousse (39) séparée par l'effet cyclone précité est à nouveau séparée par effet cyclone, mécanique ou autre (43), et le liquide en résultant (45) recyclé et recueilli dans le mélange liquide-gaz (41) provenant de la séparation par effet cyclone mentionné en premier lieu.

8. Installation pour la mise en oeuvre du procédé selon l'une des revendicatins 1 à 7 et du type comprenant un système de mélange (16, 23) de la liqueur noire pulvérisée avec du gaz de fumée, caractérisée en ce qu'elle comprend successivement et en aval du système précité, des moyens (32) de maintien en contact de la liqueur noire pulvérisée avec le gaz de fumée, au moins un cyclone ou autre élément (38) produisant une fraction liquide (41) et une fraction gaz-mousse (39), ces deux fractions alimentant une enceinte ou analogue (40) et au moins un apareil de centrifugation (66) de la fraction liquide, raccordé à ladite enceinte.

9. Installation selon la revendication 8, caractérisée par une vanne de détente (34, 34a) placée sur une conduite (33) reliant les moyens de maintien précités (32) au cyclone (38) ou placée sur la conduite (39) reliant le sommet du cyclone (38) à l'enceinte précitée (40), tandis qu'un conduit (46) d'alimentaton en gaz de fumée supplémentaire peut être raccordé à la conduite (39) précitée.

10. Installation selon la revendication 8 ou 9, caractérisée en ce qu'une enceinte de rétention (62) est éventuellement interposée entre l'enceinte (40) et l'appareil de centrifugation (66) qui est relié à un bac- tampon (69) lui-même raccordé à un décanteur (73) relié à l'enceinte de rétention (62) (figures 3 et 4).

11. Installation selon la revendication 10, caractérisée en ce que le décanteur (73) est raccordé à un appareil centrifugeur (84) par une conduite (78) communiquant avec une alimention en eau (82), ledit centrifugeur comportant une conduite (85) de sortie de liqueur clarifiée qui se divise en une portion de conduite (83) reliée à la conduite (78) précédemment mentionnée et en une portion de conduite (70) reliée au bac-tampon (69) (figure 3).

12. Installation selon la revendication 10, caractérisée en ce que le décanteur (73) est relié par une conduite (78) à un premier décanteur (100) lui-même relié par un conduit (113, 115) alimenté en eau (119, 116) à un deuxième décanteur (101) qui est raccordé à la conduite précitée (78), et en ce que le premier décanteur (100) est raccordée (110, 110a) au bac-tampon (69) et à un conduit (110b) d'évacuation du liquide clarifié (figure 4).

13. Installation selon l'une des revendications 8 à 10, caractérisée en ce que l'enceinte précitée (40) comporte en partie haute un cyclone ou un autre moyen mécanique approprié (43) de séparation de la mousse sortant de cette enceinte et un conduit (45) de recyclage de liquide reliant ledit cyclone à ladite enceinte.

14. Installation selon l'une des revendications 8 à 13, caractérisée par un système de réchauffage (5) de la liqueur noire en amont du système de mélange (16, 23).

15. Installation selon l'une des revendications 8 à 14, caractérisée par des moyens de régulation et de contrôle du débit de la liqueur noire et de gaz de fumée parvenant au système de mélange précité (16, 23), de tels moyens étant également prévus en amont et en aval de l'enceinte de séparation (40).

0249545

FIG.1

_Fig. 2_

0249545

Fig.3

0249545

Fig. 4

0249545

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 202 909 (BKMI INDUSTRIANLAGEN GmbH) <br><br> * Figures 1,4,5; revendications 1,7-9,14,16,19; page 10, ligne 9 - page 11, ligne 13; page 12, ligne 25 - page 14, ligne 23; exemples 1.1,1.3,3 * | 1,2,8, 9,13, 15 | D 21 C 11/04 <br> B 01 D 19/02 |
| | --- | | |
| A | FR-A-2 561 130 (COMPAGNIE FRANCAISE D'ETUDES ET DE CONSTRUCTION "TECHNIP") <br> * Figures 4-6; revendications 1,5,12-15,17; page 10, ligne 2 - page 17, dernière ligne * | 1,2,7- 9,13, 15 | |
| | ----- | | |

DOMAINES TECHNIQUES
RECHERCHES (Int. Cl.4)

B 01 D
D 21 C

Le présent rapport de recherche a été établi pour toutes les revendications

| Lieu de la recherche | Date d'achèvement de la recherche | Examinateur |
|---|---|---|
| LA HAYE | 08-09-1987 | NESTBY K. |